## Europäisches Patentamt

## European Patent Office

## Office européen des brevets

(19)

(11) Veröffentlichungsnummer: **0 284 647**
**B1**

(12) # EUROPÄISCHE PATENTSCHRIFT

(45) Veröffentlichungstag der Patentschrift:
**31.10.90**

(51) Int. Cl.⁵: **F16D 3/16**, F16D 3/76, F16D 3/70

(21) Anmeldenummer: **87111220.7**

(22) Anmeldetag: **04.08.87**

(54) Gleichlaufgelenk.

(30) Priorität: **25.03.87 DE 3709768**

(43) Veröffentlichungstag der Anmeldung:
**05.10.88 Patentblatt 88/40**

(45) Bekanntmachung des Hinweises auf die Patenterteilung:
**31.10.90 Patentblatt 90/44**

(84) Benannte Vertragsstaaten:
**DE FR GB IT SE**

(56) Entgegenhaltungen:
**DE-A- 3 134 310**
**FR-A- 1 205 789**
**FR-A- 1 225 869**
**GB-A- 857 420**
**GB-A- 946 363**
**US-A- 2 037 048**
**US-A- 2 727 368**
**US-A- 2 995 907**

(73) Patentinhaber: **Firma Carl Freudenberg, Höhnerweg 2-4,
D-6940 Weinheim/Bergstrasse(DE)**

(72) Erfinder: **Andrä, Rainer, Dr., Dehrner Strasse 19,
D-6250 Limburg 5(DE)**
Erfinder: **Gärtner, Falk, Mudauer Ring 215,
D-6800 Mannheim 51(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Gleichlaufgelenk für einen Achsantrieb bei dem die beiden Wellenenden durch eine Kupplungsglocke und ein Gelenk verbunden sind, wobei das Gelenk von der Kupplungsglocke außenseitig umschlossen ist und wobei zwischen dem Gelenk und der Kupplungsglocke eine Stützhülse aus metallischem Werkstoff vorgesehen ist, wobei die Stützhülse mit einem radial nach innen weisenden Flanschvorsprung versehen ist, der einen axialen Abstand von der Kupplungsglocke aufweist und wobei die Stützhülse durch eine erste Dämpfungsschicht aus Gummi relativ beweglich mit der Kupplungsglocke verbunden ist.

Ein solches Gleichlaufgelenk ist aus der GB-A 857 420 bekannt. Die sich bei einer verwendungsbedingten Zerstörung der ersten Dämpfungsschicht ergebenden Notlaufeigenschaften sind wenig befriedigend und machen die Verwendung eines solchen Gleichlaufgelenkes insbesondere in schweren Kraftfahrzeugen problematisch.

Der Erfindung liegt die Aufgabe zugrunde, ein solches Gleichlaufgelenk derart weiterzuentwickeln, daß die Gefahr einer Beschädigung der ersten Dämpfungsschicht deutlich reduziert ist bei einer Uerbesserung der Belastbarkeit und der Notlaufeigenschaften.

Diese Aufgabe wird erfindungsgemäß dadurch gelöst, daß die erste Dämpfungsschicht bei einer Dicke von 0,5 bis 5 mm eine axiale Länge aufweist, die wenigstens dem fünffachen Wert ihrer Dicke entspricht, daß der Flanschvorsprung das Gelenk im Bereich einer Stirnfläche seines Außenringes berührt, daß der durch den axialen Abstand zwischen dem Flanschvorsprung und der Kupplungsglocke gebildete Spalt durch eine zweite Dämpfungsschicht aus Gummi überbrücktiist, daß der Flanschvorsprung auf der von dem Außenring abgewandten Seite mit axial oder radial vorspringenden, gleichmäßig auf dem Umfang verteilten, säulenförmig ausgebildeten Mitnehmern versehen ist, daß die Mitnehmer in entsprechend gestaltete Mitnehmeröffnungen der Kupplungsglocke eingreifen, daß zwischen den Mitnehmeröffnungen und den Mitnehmern Abstände vorgesehen sind und daß die Abstände durch dritte Dämpfungsschichten aus Gummi überbrückt sind.

Eine gegenseitige Berührung der aus Metall bestehenden Mitnehmer und der Mitnehmeröffnungen der Kupplungsglocke ist hierdurch unter normalen Betriebsbedingungen ausgeschlossen, wird jedoch in extremen Betriebssituationen bewußt in Kauf genommen, um einer Zerstörung der ersten und/oder zweiten Dämpfungsschichten vorzubeugen. Die erfindungsgemäße Wellenkupplung besitzt hierdurch gute Notlaufeigenschaften. Durch die Anordnung dritter Dämpfungsschichten aus Gummi zwischen den Mitnehmern und den Mitnehmeröffnungen resultiert neben einer Vermeidung von Anschlaggeräuschen ein nur allmählicher Kraftanstieg bei der Ubertragung großer Drehmomente. Die Belastbarkeit der Wellenkupplung ist dadurch deutlich erhöht.

Die erste Dämpfungsschicht hat bei einer Dicke von 0,5 bis 5 mm eine axiale Länge, die wenigstens dem fünffachen Wert ihrer Dicke entspricht, vorteilhaft wenigstens dem achtfachen Wert der Dicke. Unter Vermeidung jeglicher Exzentrizitäten des fliegend in dem Gleichlaufgelenk gelagerten Wellenendes ergibt sich durch diese Ausbildung eine ausgezeichnete, gegenseitige Isolierung der in beiden Wellenenden wirksamen, hochfrequenten Drehschwingungen. Diese werden zum einen vom Motor selbst erregt und zum anderen durch die Abrollbewegung des Reifenprofils auf der Fahrbahnoberfläche. Sie sind daher stets vorhanden und können sich in dem erfindungsgemäßen Gleichlaufgelenk nicht in ungünstiger Weise gegenseitig verstärken und zu einer Überlastung führen. Eine Verwendung auch in schweren Fahrzeugen ist dadurch ohne weiteres möglich.

Die erste Dämpfungsschicht weist bei einer besonders geringen Dicke in radialer Richtung eine besonders große Länge in axialer Richtung auf und verbindet die Stützhülse und die Kupplungsglocke gewöhnlich auf dem gesamten Umfang. Beide Maschinenteile sind dadurch in ausgezeichneter Weise relativ beweglich in Umfangsrichtung und in axialer Richtung, während sich zugleich eine ausgezeichnete Führung in radialer Richtung ergibt. Selbst bei höchsten Drehzahlen treten daher keinerlei schwingungsverursachende Unwuchten auf. Gleichwohl lassen sich für die Herstellung der ersten Dämpfungsschicht die einschlägig verwendeten, üblichen Gummiqualitäten verwenden, bevorzugt solche mit einer Härte Shore A von etwa 65 bis 85.

Für Anwendungsfälle, in denen das auszurüstende Kraftfahrzeug mit einer üblichen Sommerbereifung sowie mit einem 4-Zylinder-Verbrennungsmotor ausgestattet ist, hat es sich als ausreichend bewährt, wenn nur eine einzige Dämpfungsschicht vorhanden ist, die die Stützhülse und die Kupplungsglocke auf dem gesamten Umfang verbindet. Beispielsweise in Fällen, in denen eine grobstollige Winterbereifung zur Anwendung gelangt, kann es demgegenüber zweckmäßig sein, wenigstens zwei entsprechend ausgebildete Dämpfungsschichten in radialer Richtung aufeinander folgen zu lassen und zwischen den beiden eine dünnwandige metallische Trennhülse anzuordnen. Die radialen Schichtdicken jeder der beiden Dämpfungsschichten können in einem solchen Falle in der Nähe des unteren, in Patentanspruch 1 angegebenen Grenzwertes angesiedelt sein, um das Auftreten von Unwuchterscheinungen zu vermeiden.

Die Stützhülse ist mit einem nach innen weisenden Flanschvorsprung versehen worden, der einen axialen Abstand von der Kupplungsglocke aufweist und das Gelenk im Bereich einer Stirnfläche seines Außenringes berührt. Die Erzielung einer in axialer Richtung präzisen Zuordnung zwischen der Stützhülse und dem Aussenring des Gleichlaufgelenkes wird dadurch erleichtert, insbesondere in Fällen, in denen beide Teile in axialer Richtung verschraubt sind. Für die Erzielung eines schwingungsfreien Betriebes ist diese Möglichkeit von großer Bedeutung.

Durch die Überbrückung des vorstehend angesprochenen Spaltes nit einer zweiten Dämpfungsschicht aus Gummi ergibt sich eine besonders gute gegenseitige Zuordnung zwischen der Stützhülse und der Kupplungsglocke. Auch bei extremen Lenkeinschlägen und bei der Übertragung großer Drehmomente wird hierdurch eine axiale, gegenseitige Verschiebung weitgehend ausgeschlossen. Auch in einer solchen Betriebssituation werden daher keine störenden Schwingungen zwischen den beiden Wellenenden übertragen.

Die dritten Dämpfungsschichten können darüberhinaus in Umfangsrichtung beiderseits zwischen den Mitnehmern und den Mitnehmeröffnungen durch zu diesen parallele Ausnehmungen unterbrochen sein, wobei die Ausnehmungen der dritten Dämpfungsschichten zweckmäßig einem jeden Mitnehmer bei halbmondförmigem Profil in Umfangsrichtung gegenüber zugeordnet sind und sich über die gesamte Länge der dritten Dämpfungsschichten erstrecken. Der Kraftanstieg bei Übertragung hoher Drehmomente wird hierdurch gemildert.

In Hinblick auf eine kostengünstige Herstellung des erfindungsgemäßen Gleichlaufgelenkes hat es sich als zweckmäßig bewährt, wenn die ersten, die zweiten und die dritten Dämpfungsschichten einstückig verbunden sind. Sie weisen im Regelfalle auch eine im wesentlichen übereinstimmende Dicke auf.

Der Gegenstand der vorliegenden Erfindung wird nachfolgend durch die als Anlage beigefügten Zeichnung weiter erläutert. Es zeigen:

Figur 1 ein winkelbewegliches Gleichlaufgelenk in längsgeschnittener Darstellung.

Figur 2 das winkelbewegliche Gleichlaufgelenk gemäß Figur 1 in einer Ansicht von vorn.

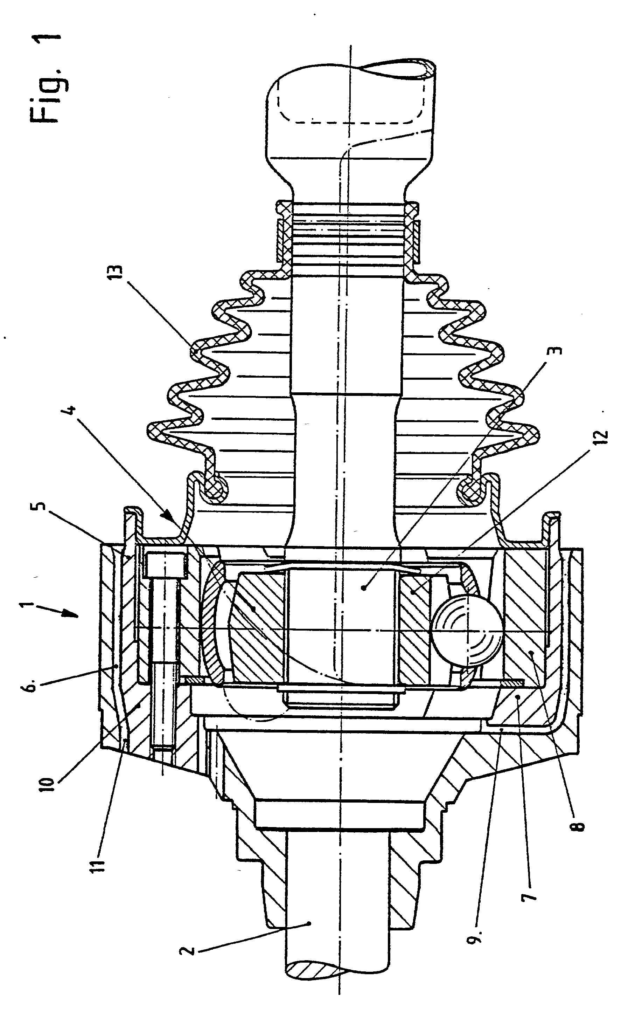

Das in Figur 1 gezeigte Gleichlaufgelenk umfaßt die Kupplungsglocke 1, die unverdrehbar an dem einen Wellenende 2 festgelegt ist. Sie umschließt das andere Wellenende 3 in radialem Abstand auf einer gewissen axialen Länge. In dem durch den Abstand gebildeten Spalt ist das Gelenk 4 angeordnet, das die Übertragung eines Drehmomentes zwischen den Wellenenden 2, 3 erlaubt. Es ist zur Erreichung dieses Zweckes durch eine sich in axialer Richtung erstreckende Vielkeilverzahnung mit dem Wellenende 3 verbunden und durch eine gegenseitige Verschraubung mit der Stützhülse 5. In beiden Fällen gelangen somit formschlüssige Verbindungselemente zur Anwendung, die eine Relativverdrehung einerseits zwischen dem Wellenende 3 und dem Innenring 12 des Gelenkes und andererseits zwischen der Stützhülse 5 und dem Außenring 8 des Gelenkes mit völliger Sicherheit ausschließen. Die Anwendung entsprechender Verbindungselemente in bezug auf die Festlegung eines Gelenkes an zu verbindenden Wellenenden ist an sich bekannt und nicht Gegenstand der vorliegenden Erfindung. Diese bezieht sich vielmehr auf das Vorhandensein einer speziell dimensionierten Klauenkupplung, welche die den Außenring 8 des Gelenkes 4 tragende Stützhülse 5 überlastungssicher mit der Kupplungsglocke verbindet und eine Isolierung hochfrequenter Drehschwingungen bewirkt. Diese können daher nicht mehr zum Auftreten von Kraftspitzen im Bereich des Gleichlaufgelenkes 4 führen und eine vorzeitige Zerstörung desselben bewirken. Auch eine Verwendung in schweren Kraftfahrzeugen ist dadurch problemlos möglich.

Bei dem in Figur 1 gezeigten Ausführungsbeispiel berühren sich der Außenring B und die Stützhülse 5 nur im Bereich einer geringen axialen Erstreckung, während im übrigen Bereich ein Luftspalt geringer, radialer Breite zwischen beiden vorhanden ist. Die bei Einleitung von Schwingungen in der Dämpfungsschicht 6 induzierte Wärme kann dadurch nicht in störendem Maße auf das Gelenk übertragen werden und zu einer nachteiligen Veränderung des darin enthaltenen Schmierstoffes führen. Die gebräuchlichen Schmierfette lassen sich daher weiterhin verwenden.

Die Stützhülse 5 ist an einem Ende mit einem nach innen ragenden Flanschvorsprung 7 versehen, der unmittelbar an dem Außenring 8 des Gelenkes 4 anliegt und in gleichmäßig auf dem Umfang verteilten Flächenbereichen von sich in axialer Richtung erstreckenden Gewindebohrungen durchbrochen ist. Diese dienen der Aufnahme der für die Verschraubung des Außenringes 8 mit der Stützhülse 5 benötigten Gewindebolzen.

Auf der von dem Außenring 8 abgewandten Seite ist zwischen dem Flanschvorsprung 7 und der Kupplungsglocke 1 ein sich im wesentlichen in radialer Richtung erstreckender Spalt vorhanden, der durch das Gummi der zweiten Dämpfungsschicht 9 überbrückt ist. Ihr Vorhandensein bewirkt eine präzise gegenseitige Zuordnung der Stützhülse 5 zu der Kupplungsglocke 1 in axialer Richtung. Auch beim Auftreten extremer Überlastungen kann sich in dieser Richtung somit keine nennenswerte Relativverlagerung zwischen beiden Teilen ergeben.

Darüberhinaus weist der Flanschvorsprung im Bereich der Gewindebohrung auf der von dem Außenring abgewandten Seite axial vorspringende, säulenförmig ausgebildete Mitnehmer 10 auf, die in entsprechend gestaltete Mitnehmeröffnungen eingreifen.

Dabei sind zwischen den Mitnehmeröffnungen und den Mitnehmern 10 Abstände in allen Richtungen vorhanden, welche durch das Gummi der dritten Dämpfungsschichten 11 überbrückt sind. Plötzlich auftretende Überlastungen werden hierdurch federnd aufgefangen, was eine unbeabsichtigte Beschädigung der ersten Dämpfungsschichten 6 weitgehend ausschließt. Die Dämpfungsschichten 6, 9 und 11 haben eine übereinstimmende Schichtdicke. Sie sind einstückig ineinander übergehend ausgebildet und bestehen aus demselben gummielastischen Werkstoff einer Härte Shore A von 75.

Die Stützhülse 5 ist auf der dem Verbrennungsmotor zugwandten Seite, d.h. auf der von dem Wellenende 2 abgewandten Seite des Gleichlaufgelenkes mit einem umlaufenden, sich in axialer Richtung erstreckenden Vorsprung versehen, der das Gelenk 4 in axialer Richtung überragt und dem flüssigkeitsdichten, statisch ruhenden Anschluß des Faltenbalges 13 dient. Das andere Ende desselben ist unverdrehbar und flüssigkeitsdicht an der Oberfläche der Antriebswelle festgelegt, beispielsweise unter Zuhilfenahme eines an sich bekannten Schlauchbinders. Relativverdrehungen zwischen den beiden Enden können unter normalen Betriebsbedingungen nicht auftreten. Die Gebrauchsdauer des Faltenbalges 13 ist dadurch als sehr hoch anzusetzen. Eine Kontrolle oder Ergänzung des enthaltenen Schmierstoffvorrates ist im allgemeinen entbehrlich.

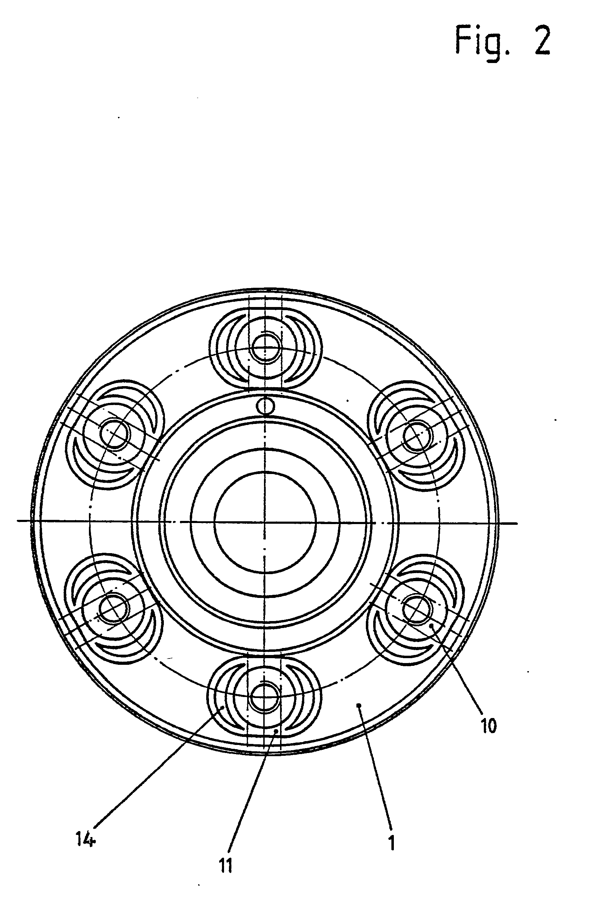

Die Vorderansicht der vorstehend beschriebenen Wellenkupplung wird in Figur 2 gezeigt. Sie ist dadurch gekennzeichnet, daß die Kupplungsglocke 1 außen- und innenseitig durch einander konzentrisch umschließende Ringflächen begrenzt ist. In der Zwischenzone weist die Kupplungsglocke 1 sechs gleichmäßig auf dem Umfang verteilte Mitnehmeröffnungen auf, die sich senkrecht zur Zeichenebene erstrecken und die in gleicher Richtung verlaufenden, säulenförmig ausgebildeten Mitnehmer 10 der Stützhülse 5 in Abständen umschließen.

Letztere sind durch den gummielastischen Werkstoff der dritten Dämpfungsschichten 11 überbrückt, welche in Umfangsrichtung beiderseits zwischen den Mitnehmern 10 und den Mitnehmeröffnungen durch zu diesen parallele Ausnehmungen 14 unterbrochen sind. Die Ausnehmungen 14 der dritten Dämpfungsschichten 11 sind einem jeden Mitnehmer 10 bei halbmondförmigem Profil in Umfangsrichtung spiegelbildlich zugeordnet und erstrecken sich über die gesamte axiale Länge der dritten Dämpfungsschichten. Der sich bei einer Relativverdrehung zwischen der Stützhülse 5 und der Kupplungsglocke 1 ergebende Kraftanstieg verläuft dementsprechend allmählich und unter Vermeidung eines sprunghaften Anstieges. Überlastungsbedingte Zerstörungen insbesondere der ersten und der zweiten Dämpfungsschicht 6, 9 werden dadurch weitgehend ausgeschlossen.

Das erfindungsgemäße Gleichlaufgelenk zeichnet sich durch einen relativ einfachen Aufbau aus. Es gewährleistet eine präzise, rotationssymmetrische Führung der Antriebswelle in der Kupplungsglocke. Dennoch werden hochfrequente Schwingungen in guter Weise isoliert. Sie können daher weder zu einer vorzeitigen Zerstörung des Gelenkes führen noch sich akustisch in dem angeschlossenen Kraftfahrzeug bemerkbar machen.

**Patentansprüche**

1. Gleichlaufgelenk für einen Achsantrieb, bei dem die beiden Wellenenden durch eine Kupplungsglocke (1) und ein Gelenk (4) verbunden sind, wobei das Gelenk (4) von der Kupplungsglocke (1) außenseitig umschlossen ist und wobei zwischen dem Gelenk (4) und der Kupplungsglocke (1), eine Stützhülse (5) aus metallischem Werkstoff vorgesehen ist, wobei die Stützhülse (5) mit einem radial nach innen weisenden Flanschvorsprung (7) versehen ist, der einen axialen Abstand von der Kupplungsglocke (1) aufweist und wobei die Stützhülse (5) durch eine erste Dämpfungsschicht (6) aus gummi relativ beweglich mit der Kupplungsglocke (1) verbunden ist, dadurch gekennzeichnet, daß die erste Dämpfungsschicht (6) bei einer Dicke von 0,5 bis 5 mm eine axiale Länge aufweist, die wenigstens dem fünffachen Wert ihrer Dicke entspricht, daß der Flanschvorsprung (7) das Gelenk (4) im Bereich einer Stirnfläche seines Aussenringes (8) berührt, daß der durch den axialen Abstand zwischen dem Flanschvorsprung (7) und der Kupplungsglocke (1) gebildete Spalt durch eine zweite Dämpfungsschicht (9) aus Gummi überbrückt ist, dass der Flanschvorsprung (3) auf der von dem Außenring (8) abgewandten Seite mit axial oder radial vorspringenden, gleichmässig auf dem Umfang verteilten, säulenförmig ausgebildeten Mitnehmern (10) versehen ist, daß die Mitnehmer (10) in entsprechend gestaltete Mitnehmeröffnungen der Kupplungsglocke (1) eingreifen, daß zwischen den Mitnehmeröffnungen und den Mitnehmern (10) Abstände vorgesehen sind und daß die Abstände durch dritte Dämpfungsschichten (11) aus Gummi überdrückt sind.

2. Gleichaufgelenk nach Anspruch 1, dadurch gekennzeichnet, daß die dritten Dämpfungsschichten (11) in Umfangsrichtung beiderseits zwischen den Mitnehmern (10) und den Mitnehmeröffnungen durch zu diesen parallelen Ausnehmungen (14) unterbrochen sind.

3. Gleichlaufgelenk nach Anspruch 2, dadurch gekennzeichnet, daß die Ausnehmungen (14) der dritten Dämpfungsschichten (11) einem jeden Mitnehmer (10) bei halbmondförmigem Profil in Umfangsrichtung spiegelbildlich zugeordnet sind und sich über die gesamte axiale Länge der dritten Dämpfungsschichten (11) erstrecken.

4. Gleichaufgelenk nach Anspruch 1 bis 3, dadurch gekennzeichnet, daß die ersten, die zweiten und die dritten Dämpfungsschichten (6, 9, 11) einstückig verbunden sind.

5. Gleichlaufgelenk nach Anspruch 4, dadurch gekennzeichnet, daß die ersten, die zweiten und die dritten Dämpfungsschichten (6, 9, 11) eine im wesentlichen übereinstimmende Dicke haben.

**Revendications**

1. Articulation de synchronisme pour une commande d'arbre dans laquelle les deux extrémités d'arbre sont assemblées par une cloche d'accouplement (1) et une articulation (4), tandis que l'articulation (4) est entourée extérieurement par la cloche d'accouplement (1), qu'il existe entre l'articulation (4) et la cloche d'accouplement (1) un manchon de support (5) en matériau métallique, que le manchon de support (5) est pourvu d'un flasque (7) en saillie vers l'intérieur qui présente une certaine distance axiale par rapport à la cloche d'accouplement (1) et que le manchon de support (5) est assemblé à la cloche d'accouplement (1) avec possibilité de déplacement relatif au moyen d'une première couche d'amortissement (6) en caoutchouc, caractérisée en ce que la première couche d'amortissement (6) présente, pour une épaisseur de 0,5 à 5 mm, une longueur axiale qui correspond au moins à cinq fois cette épaisseur, que le flasque en saillie (7) vient en contact avec l'articulationß(4) dans la zone d'une surface frontale de sa baue extérieure (8), que le jeu formé par la distance axiale entre le flasque en saillie (7) et la cloche d'accouplement (1) est rempli par une deuxième couche d'amortissement (9) en caoutchouc, que le flasque en saillie (3) est pourvu, sur le côté opposé à la bague extérieure (8), d'éléments d'entraînement (10) en forme de colonnes répartis régulièrement sur la périphérie et faisant saillie dans le sens axial ou radial, que l'élément d'entraînement (10) s'engage dans des orifices d'entraînement de forme correspondante de la cloche d'accouplement (1), qu'il est prévu des intervalles entre les orifices d'entraînement et les éléments d'entraînement (10) et que ces intervalles sont remplis par des troisièmes couches d'amortissement (11) en caoutchouc.

2. Articulation de synchronisme selon la revendication 1, caractérisée en ce que les troisièmes couches d'amortissement (11) sont interrompues dans la direction de la périphérie, de part et d'autre entre les éléments d'entraînement (10) et les orifices d'entraînement, par des cavités (14) parallèles à ceux-ci.

3. Articulation de synchronisme selon la revendication 2, caractérisé en ce que les cavités (14) des troisièmes couches d'amortissement (11) sont disposées symétriquement par rapport à chacun des éléments d'entra;nement (10) dans la direction de la périphérie avec un profil en demi-lune et qu'elles s'étendent sur toute la longueur axiale des troisièmes couches d'amortissement (11).

4. Articulation de synchronisme selon les revendications 1 à 3, caractérisée en ce que la première, la deuxième et les troisièmes couches d'amortissement (6, 9, 11) sont assemblées en une seule pièce.

5. Articulation de synchronisme selon la revendication 4, caractérisée en ce que la première, la deuxième et les troisièmes couches d'amortissement (6, 9, 11) ont essentiellement un épaisseur correspondante.

**Claims**

1. A universal joint for an axle drive, in which the two ends of the shaft are connected by a clutch housing (1) and a joint (4), the joint (4) being surrounded on the outside by the clutch housing (1), and a support sleeve (5) made of metallic material being provided between the joint (4) and the clutch housing (1), and the support sleeve (5) being fitted with a flange projection (7) facing radially inwards which has an axial spacing from the clutch housing (1), and the support sleeve (5) being connected to the clutch housing (1) in a relatively mobile manner by means of a first damping layer (6) made of rubber, characterized in that the first damping layer (6) having a thickness of 0.5 to 5 mm has an axial length which corresponds to at least five times the value of its thickness, in that the flange projection (7) touches the joint (4) in the region of an end face of its outer ring (8), in that the gap formed by the axial spacing between the flange projection (7) and the clutch housing (1) is bridged by a second damping layer (9) made of rubber, in that the flange projection (3) is fitted on the side facing away from the outer ring (8) with carriers (10) of column-shaped construction projecting axially or radially and distributed evenly on the circumference, in that the carriers (10) engage in correspondingly designed carrier openings in the clutch housing (1), in that spacings are provided between the carrier openings and the carriers (10), and in that the spacings are bridged by third damping layers (11) made of rubber.

2. A universal joint according to claim 1, characterized in that the third damping layers (11) are interrupted in the circumferential direction on both sides between the carriers (10) and the carriers openings by recesses (14) parallel to the latter.

3. A universal joint according to claim 2, characterized in that the recesses (14) of the third damping layers (11) in a semi-circular profile are assigned to each carrier (10) in mirror image in the circumferential direction and extend over the entire axial length of the third damping layers (11).

4. A universal joint according to any of claims 1 to 3, characterized in that the first, the second and the third damping layers (6, 9, 11) are connected in one piece.

5. A universal joint according to claim 4, characterized in that the first, the second and the third damping layers (6, 9, 11) have an essentially equal thickness.

Fig. 1

EP 0 284 647 B1

Fig. 2